# EUROPEAN PATENT SPECIFICATION

(11) **EP 2 417 883 B1**
(45) Date of publication and mention of the grant of the patent: **05.06.2019**
(21) Application number: 10761842.3
(22) Date of filing: 06.04.2010
(51) Int. Cl.: A47J 27/086, A47J 27/62, H05B 6/64, F24C 1/04, A47J 37/00, H05B 6/68

(54) **METHOD FOR CONTROLLING A COOKING APPARATUS**
VERFAHREN ZUR STEUERUNG EINES KOCHGERÄTES
PROCÉDÉ DE COMMANDE D'UN DISPOSITIF DE CUISSON

(30) Priority: 06.04.2009 KR 20090029651
(43) Date of publication of application: 15.02.2012
(73) Proprietor: LG Electronics Inc., Seoul 150-721 (KR)
(72) Inventor: CHOI, Sung-Ho, Changwon City Gyoungsangnam-do 641-711 (KR); KIM, Su-Hwan, Changwon City Gyoungsangnam-do 641-711 (KR); LEE, Sang-Ki, Changwon City Gyoungsangnam-do 641-711 (KR); OH, Kwang-Suk, Changwon City Gyoungsangnam-do 641-711 (KR); KIM, Jeong-Kil, Changwon City Gyoungsangnam-do 641-711 (KR); SHIN, Jang-Mo, Changwon City Gyoungsangnam-do 641-711 (KR)
(74) Representative: Vossius & Partner Patentanwälte Rechtsanwälte mbB
(86) International application number: PCT/KR2010/002087
(87) International publication number: WO 2010/117181

(56) References cited:
- EP-A1- 1 372 358
- GB-A- 2 068 182
- JP-A- 2005 282 893
- JP-A- 2008 249 167
- JP-A- 2009 014 237
- KR-A- 20060 046 737
- US-A1- 2004 232 140

## Description

### [Technical Field]

The present disclosure relates to a cooker, and more particularly, to a method for controlling a cooker in order to cook food using steam.

### [Background Art]

Cookers are home appliances that heat a food using electricity or gas. In recent, cookers in which a steam function for supplying steam into a food is added to supplement moisture which is evaporated during the cooking of the food are being put on the market.

GB 2 068 182 (A) relates to a high frequency heating apparatus provided with a power controller for varying the alternately generated microwave and steam outputs in correlative fashion. US 2004/232140 (A1) relates to a heating control method of a high-frequency heating apparatus with steam generation function and the high-frequency heating apparatus with steam generation function for heat-treating a material to be heated using high-frequency heating and steam heating in combination. EP 1 372 358 (A1) relates to a high frequency heating apparatus with steam generation function in which high frequency heating and steam heating are combined to heat-treat an object to be heated. The document US 2004/232140 (A1) discloses a method for controlling a cooker according to the preamble of claim 1.

### [Disclosure]

### [Technical Problem]

However, steam supplied into the cooking chamber may be discharged into the cooker.

### [Technical Solution]

The present invention is defined by claim 1, which defines a method of controlling a cooker configured to effectively and safely cook a food using steam.

In one embodiment, a method for controlling a cooker includes: oscillating microwave supplied to a cooking chamber, by a high-frequency heating source; and generating steam supplied to the cooking chamber, by a steam generator, wherein in a case a signal for initiating the operation of the steam generator is input before the operation of the high-frequency heating source is started, the operation of the steam generator is initiated at a preset time separately of a time when the operation of the high-frequency heating source is started, and in a case a signal for initiating the operation of the steam generator is input after the operation of the high-frequency heating source is started, the operation of the steam generator is initiated at a time when the signal is input. The method further comprises the operation of circulating air inside the cooking chamber by a convection part in a case the steam generating operates, wherein the operation of the convection part ends after the operation of the steam generator (30) is completed.

The details of one or more embodiments are set forth in the accompanying drawings and the description below. Other features will be apparent from the description and drawings, and from the claims.

### [Advantageous Effects]

According to the embodiments, the food may be further effectively and safely cooked using steam.

### [Description of Drawings]

Fig. 1 is a schematic view of a cooker controlled by a method for controlling a cooker according to an embodiment.
Fig. 2 is a control flowchart illustrating a method for controlling a cooker according to a first embodiment.
Fig. 3 is a graph illustrating operating times of components according to the first embodiment.
Figs. 4 and 5 are control flowcharts illustrating a method for controlling a cooker according to a second embodiment.
Fig. 6 is a graph illustrating operating times of components according to the second embodiment. Fig. 7 shows an embodiment which is not part of the present invention.

### [Best Mode]

Hereinafter, a cooker controlling method according to embodiments will be explained in detail with reference to the accompanying drawings.

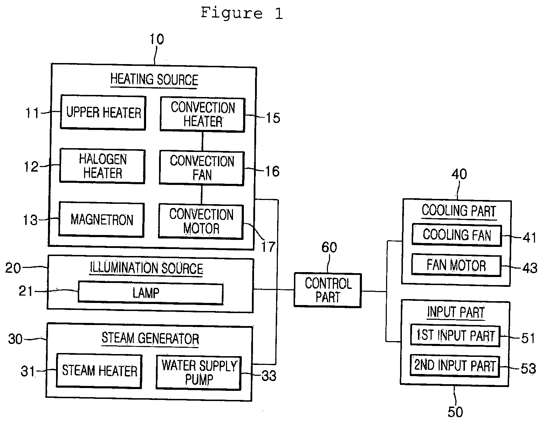

Fig. 1 is a schematic view of a cooker controlled by a method for controlling a cooker according to an embodiment.

Referring to Fig. 1, in the current embodiment, a heating source 10 for cooking food in a cooking chamber includes an upper heater 11, a halogen heater 12 and a magnetron 13. The upper heater 11 is installed in the upper portion of a cooking chamber to provide radiating heat for the cooking chamber. As the upper heater 11, a Sheath heater may be used. And, the halogen heater 12 provides radiating heat including light and heat to the cooking chamber. The halogen heater 12 provides radiating heat to the cooking chamber through a porous part (not shown) installed in the upper portion of the cooking chamber and formed at the ceiling of the cooking chamber. The magnetron 13 oscillates microwave irradiated inward the cooking chamber.

Also, the heating source 10 further includes a convention heater 15, a convention fan 16 and a convection motor 17. The convection heater 15, the convection fan 16 and the convection motor 17 supply convective heat to the cooking chamber. More particularly, since air heated by the convection heater 15 circulates around the cooking chamber by the operation of the convection fan 16, convective heat is supplied to the cooking chamber. The convection motor 17 provides a drive force for the operation of the convection fan 16.

An illumination source 20 illuminates inside the cooking chamber. As the illumination source 20, a lamp 21 may be used.

And, a steam generator 30 may be provided to supply steam into the cooking chamber. The steam generator 30 includes a steam heater 31 and a water supply pump 33. The steam heater 31 heats steam water for generating steam supplied to the cooking chamber. The water supply pump 33 supplies steam water heated by the steam heater 31.

For the cooling of the heating source 10 and the ventilation of the inside of the cooking chamber, a cooling part 40 may be provided. The cooling part 40 includes a cooling fan 41 and a fan motor 43. That is, by means of air flowing by the cooling fan 41 and the fan motor 43, the encapsulation parts of the halogen heater 12, a magnetron 13, a steam heater 31 and a water supply pump 33 may be cooled. Also, in a case the fan motor 43 is driven, the cooling fan 41 operates so that the exterior air may be supplied inside the cooking chamber, and air let inside the cooking chamber may be drained to the exterior of the cooking chamber in a state of containing oil and moisture, etc. existing in the cooking chamber.

An manipulation signal for the operation of the heating source 10 and the steam generator 30 is input to an input part 50. The input part 50 includes a first input part 51 receiving a manipulation signal for cooking food in the cooking chamber and a second input part 53 receiving a manipulation signal for the supply of steam into the cooking chamber. Herein, the first input part 51 receives a manipulation signal for cooking food in the cooking chamber using at least one of the heaters 10 and the steam generator 30 (hereinafter, for the convenience of explanation, called a 'manipulation signal (OS0)' and a manipulation signal for cooking food in the cooking chamber using at least one of the heaters 10 only (hereinafter, for the convenience of explanation, called a first manipulation signal (OS1) '. More particularly, according to the manipulation signal (OS0), the operation start and end time of any one or more of the heaters 10, or the operation start and end time of any one or more of the heaters 10 and the operation start and end time of the steam generator 30 is set. Herein, the operation of the steam generator 30 indicates the operation of a steam pump 31 and a water supply pump 33 in an actual meaning. And, the second input part 53 receives an manipulation signal for the start and end of a steam supplying into the cooking chamber among the operation of the heating source 10 (hereinafter, for the convenience of explanation, called second and third manipulation signals (OS02)(OS03)'. More particularly, according to the input time of the second manipulation signal (OS2), the operation start time of the steam generator is set. And according to the input time of the third manipulation signal (OS3), the operation end time of the steam generator 30 is set.

In the meantime, the control part 60 controls the operation of the heating source 10, the illumination source 20, the steam generator 30 and the cooling part 40 according to a manipulation signal inputted into the input part 50. That is, in actuality, the control part 60 controls the operation of the upper heater 11, the halogen heater 12, the convection heater 15, the convection motor 17, the lamp 21, the steam heater 31, the water supply pump 33 and the fan motor 43.

Hereinafter, a cooker controlling method according to a first embodiment will be described in detail with reference to the accompanying drawings.

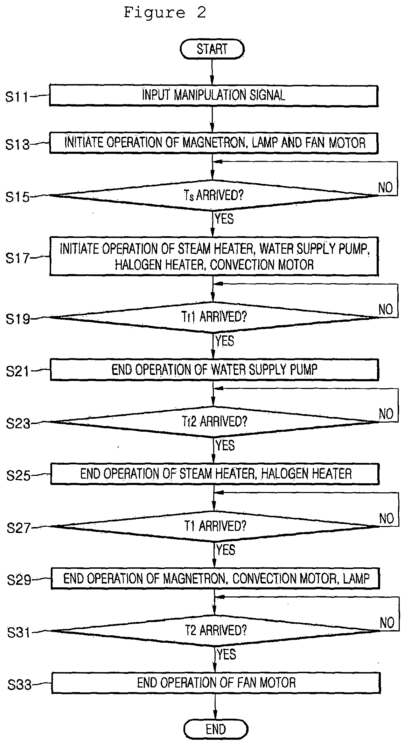

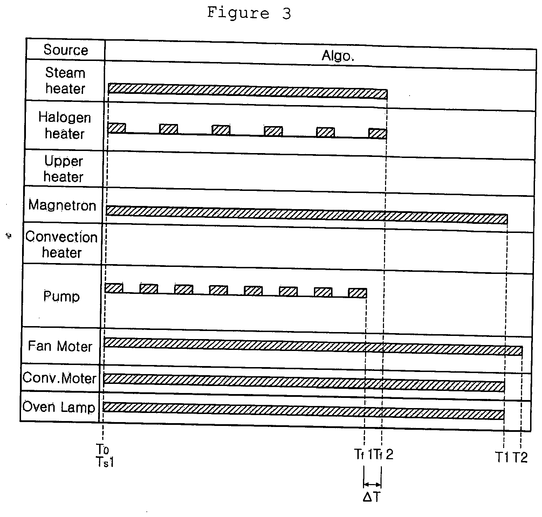

Fig. 2 is a control flowchart illustrating a method for controlling a cooker according to a first embodiment. Fig. 3 is a graph illustrating operating times of components according to the first embodiment.

Referring to Figs. 2 and 3, initially the input part 50, more particularly, the first input part 51 receives a manipulation signal (OS0) (S11).

In operation S11, in a case the first input part 51 receives the manipulation signal (OS0), the control part 60 controls to initiate the operation of a magnetron 13, a lamp 21 and a fan motor 43 at a preset heating start time (TO) according to the manipulation signal (OS0) (S13). At this time, the magnetron 13, the lamp 21 and the fan motor 43 continues an ON action. Thus, the cooking of food in the cooking chamber is initiated by the magnetron 13. Also, illumination inside the cooking chamber by the lamp 21, and the cooling of said components and the ventilation of the cooking chamber by the cooling fan 41 are performed.

And, after the operation of the magnetron 13, the lamp 21 and the fan motor 43 was initiated, the control part 60 determines if they have arrived at a preset steam generating start time (Ts) according to the manipulation signal (OS0) (S15). In the present embodiment, the steam generating start time (Ts) is set as the same point as the heating start time (TO). However, based on food cooked in the cooking chamber, the steam generating start time (Ts) may be set at a different point from the heating start time (TO), that is may be set at a point after the heating start time (TO).

In operation S15, determined that the steam generating start time (Ts) has arrived, the control part 60 controls to initiate the operation of the steam generator 30, the halogen heater 12 and the convection motor 17 (S17). Thus, by the operation of the steam heater 31 and the water supply pump 33, steam is supplied into the cooking chamber. More particularly, steam water supplied by the water supply pump 33 is heated by means of the steam heater 31 and then furnished into the cooking chamber in a steam form. At this time, the steam heater 21 continues an ON action, and the water supply pump 33 performs a pumping action at a preset time interval according to the manipulation signal (OS0). Also, by the operation of the halogen heater 12, a phenomenon that steam furnished into the cooking chamber leaks out of the cooking chamber through a porous part, which transfers the light and heat of the halogen heater 12 to the cooking chamber, to cause damage to the halogen heater 12, etc. is prevented. In addition, by circulating air inside the cooking chamber through the convection fan 16 driven by the operation of the convection motor 17, steam furnished into the cooking chamber may circulate inside the cooking chamber more effectively.

In operation S17, the halogen heater 12 repeats ON/OFF action at a preset time interval according to the manipulation signal (OS0), and the convection motor 17 continues an ON action. Also, in operation S17, the steam heater 31 continues an ON action, and the water supply pump 33 repeats ON/OFF action.

Next, after the operation of the steam heater 21 and the water supply pump 33 was initiated, the control part 60 determines if they have arrived at a preset water supply end time (Tf1) according to the manipulation signal (OS0) (S19). In operation S19, determined that they have arrived at the water supply end time (Tf1), the control part 60 controls to finish the operation of the water supply pump 33 (S21). Thus, the furnishing of steam water heated by the steam heater 31 is ended. However, since the steam heater 31 continues its operation, steam water pre-supplied by the water supply pump 33 is continuously heated by the steam heater 31 and then furnished into the cooking chamber in a steam form.

And, the control part 60 determines if a preset steam heating end time (Tf2) according to the manipulation signal (OS0) has arrived after the operation of the water supply pump 33 is ended (S23). In operation S23, determined that the steam heating end time (Tf2) has arrived, the control part 60 controls to finish the operation of the steam heater 31 and the halogen heater 12 (S25). Therefore, by completing the operation of, the steam heater 31, a steam furnishing into the cooking chamber is ended.

Next, the control part 60 determines if a preset heating end time (T1) according to the manipulation signal (OS0) has arrived after the operation of the steam heater 31 and the halogen heater 12 is ended (S27). In operation S33, determined that the heating end time (T1) has arrived, the control part 60 controls to end the operation of the magnetron 13, the convection motor 17 and the lamp 21 (S29). Thus, food cooking in the cooking chamber by the magnetron 13, air circulation inside the cooking chamber by the drive of the convection motor 17, and illumination inside the cooking chamber by the lamp 21 are ended.

And, after the operation of the magnetron 13, the convection motor 17 and the lamp 21 was ended, the control part 60 determines if a preset fan motor end time (T2) according to the manipulation signal (OS0) has arrived (S31). In operation S31, determined that the fan motor end time (T2) has arrived, the control part 60 controls to end the operation of the fan motor 43. Thus, the cooling of said component and the ventilation of a kitchen by the fan motor 43 is ended.

### [Mode for Invention]

Hereinafter, a cooker controlling method according to a second embodiment will be described in detail with reference to the accompanying drawings.

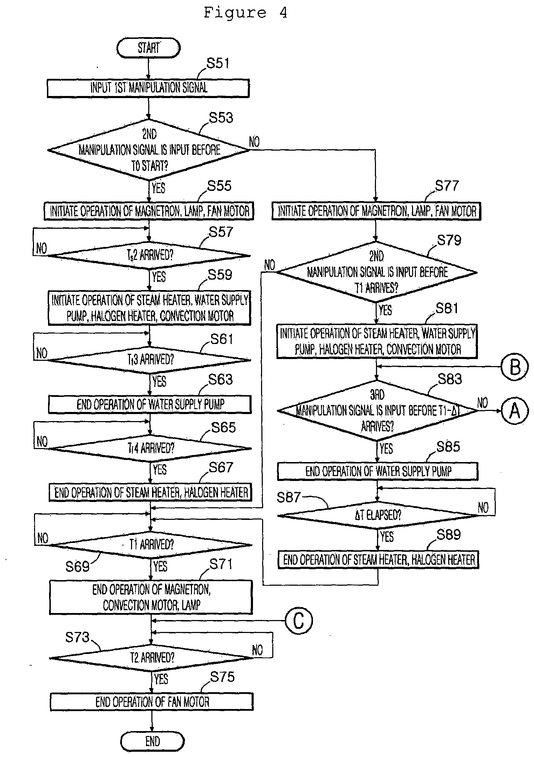

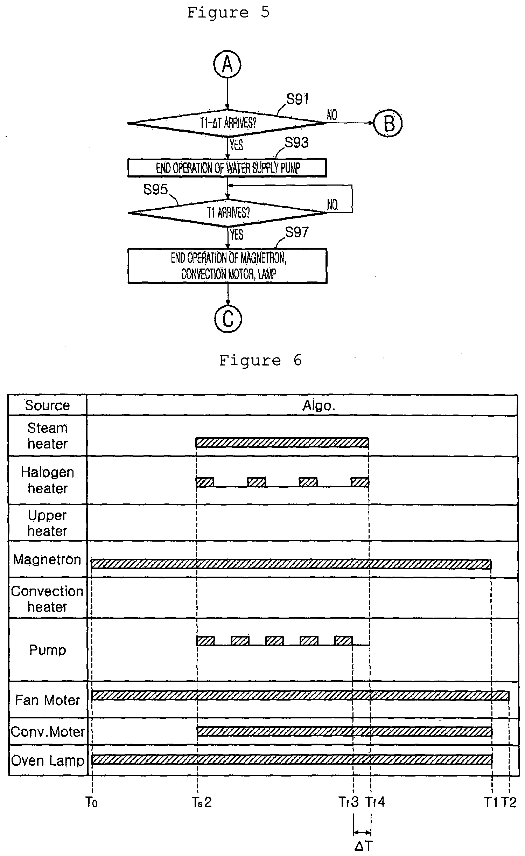

Figs. 4 and 5 are control flowcharts illustrating a method for controlling a cooker according to a second embodiment. Fig. 6 is a graph illustrating operating times of components according to the second embodiment.

Referring to Figs 4 to 7, initially an input part 50, more particularly a first input part 51 receives a first manipulation signal (OS1) (S51) . In operation S51, in a case the first input part 51 receives the first manipulation signal (OS1), the control part 60 determines if the input part 50, that is a second input part 53, received a second manipulation signal (OS2) before a preset heating start time (TO) according to the first manipulation signal (OS1) has arrived (S53).

In operation S53, determined that the second manipulation signal (OS2) was input before the heating start time (TO) has arrived, the control part 60 controls to initiate the operation of the magnetron 13, the lamp 21 and the fan motor 43 at the heating start time (TO) (S55).

And, the control part 60 determines if a preset steam generation start time (Ts) according to the second manipulation signal (OS2) has arrived after the operation of the magnetron 13, the lamp 21 and the fan motor 43 was initiated (S57). In operation S57, determined that the steam generation start time (Ts) has arrived, the control part 60 controls to initiate the operation of the steam heater 31, the water supply pump 33, the halogen heater 12 and the convection motor 17 (S59).

Next, the control part 60 determines if a preset water supply end time (Tf1) according to the second manipulation signal (OS2) has arrived after the operation of the steam heater 31, the water supply pump 33, the halogen heater 12 and the convection motor 17 was initiated (S61). In operation S61, determined that the water supply end time (Tf1) has arrived, the control part 60 controls to end the operation of the water supply pump 33 (S63).

After the operation of the water supply pump 33 was ended, the control part 60 determines if a preset steam heating end time (Tf2) according to the second manipulation signal (OS2) has arrived (S65). In operation S65, determined that the steam heating end time (Tf2) has arrived, the control part 60 controls to end the operation of the steam heater 31 and the halogen heater 12 (S67).

And, the control part 60 determines if a preset heating end time (T1) according to the first manipulation signal (OS1) has arrived after the operation of the steam heater 31 was ended (S69). In operation S69, determined that the heating end time (T1) has arrived, the control part 60 controls to end the operation of the magnetron 13, the convection motor 17 and the lamp 21 (S71).

The control part 60 determines if a preset fan motor end time (T2) according to the first manipulation signal has arrived, after the operation of the magnetron 13, the convection motor 17 and the lamp 21 was ended (S73). In operation S73, determined that the fan motor end time (T2) has arrived, the control part 60 controls to end the operation of the fan motor 43 (S75). To be sure, a specific operation of the halogen heater 12, the magnetron 13, the convection motor 17, the steam heater 31, the water supply pump 33, the lamp 21 and the fan motor 43 of the operations S51 through S75 of the present embodiment as described above may be substantially the same as that of operations S11 to S33 of the aforementioned first embodiment. In other words, in a case the first input part 51 receives the manipulation signal (OS0) and in a case the first input part 51 receives the first manipulation signal (OS1) and then the second input part 53 receives the second manipulation signal (OS2) before the heating operation start time (TO) is initiated, a specific operation of the halogen heater 12, the magnetron 13, the convection motor 17, the steam heater 31, the water supply pump 33, the lamp 21 and the fan motor 43 is the same between them. Of course, the steam generation start time (Ts), the water supply end time (Tf1) and the steam heating end time (Tf2) may be differently set based on the manipulation signal (OS0) and the second manipulation signal (OS2). Therefore, in the control according to the operations S51 to S75 of the present embodiment, a specific operation of the halogen heater 12, the magnetron 13, the convection motor 17, the steam heater 31, the water supply pump 33, the lamp 21 and the fan motor 43 could be understood more definitely with reference to Fig. 3.

On the one hand, in a case the control part 60 determines that the second manipulation signal (OS2) was not inputted in operation S53 before a heating start time (T0) has arrived, the control part 60 controls to initiate the operation of the magnetron 13, the lamp 21 and the fan motor 43 at the heating start time (T0) (S77). And, the control part 60 determines again if the second manipulation signal OS2 was inputted before the heating end time (T1) has arrived (S79).

In operation S79, determined that the second manipulation signal (OS2) was inputted before the heating end time (T1) has arrived, the control part 60 controls to initiate the operation of the steam heater 31, the water supply pump 33, the halogen heater 12 and the convection motor 17 at a time (Ts2) when the second manipulation signal (OS2) is input (S81). When the operation of the steam heater 31, the water supply pump 33, the halogen heater 12 and the convection motor 17 is initiated, the control part 60 determines if the second input part 53 received a third input signal (OS3) before a point, that is a previous time by a preset remaining water removal time (ΔT) from the heating end time (T1), has arrived (S83).

In operation S89, determined that the third manipulation signal (OS3) was input before a previous time by a preset remaining water removal time (ΔT) from the heating end time (T1) has arrived, the control part 60 controls to end the operation of the water supply pump 33 at a time (Tf3) when the third operation time (OS3) is input (S85). And, when the operation of the water supply pump 33 is ended, the control part 60 determines if the remaining water removal time (ΔT) has elapsed, and controls to end the operation of the steam heater 31 and the halogen heater 12 at a time (Tf4) when the remaining water removal time (ΔT) has elapsed from the input time (Tf3) (S87) (S89) .

In the meantime, in operation S83, in a case the third manipulation signal (OS3) was not inputted before a previous time by a preset remaining water removal time (ΔT) from the heating end time (T1) has arrived, the control unit 60 controls to end the operation of the water supply pump 33 when a previous time by a preset remaining water removal time (ΔT) from the heating end time (T1) arrives (S91) (S93).

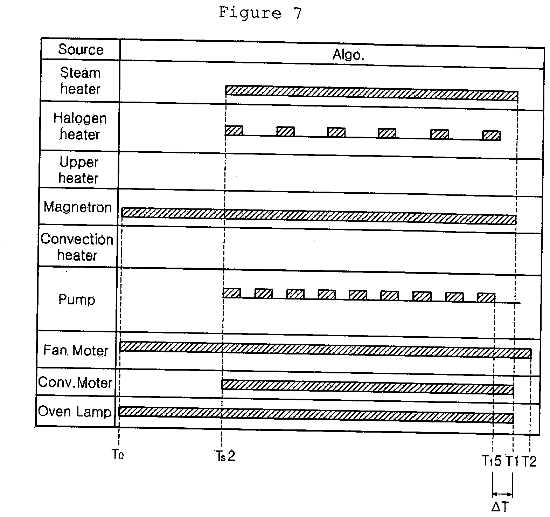

Next, the control part 60 determines if the heating end time (T1) has arrived (S95). Then, determined that the heating end time (T1) has arrived, the control part 60 controls to end the operation of the halogen heater 12, the magnetron 13, the convection motor 17, the steam heater 31 and the lamp 21 (S97) . And, the control part 60 performs the operations S73 and S75. In the present embodiment, a specific operation of the halogen heater 12, the magnetron 13, the convection motor 17, the steam heater 31, the water supply pump 33, the lamp 21 and the fan motor 43 in operation S51, operation S53, operations S77 through S83, operations S91 through S97, operation S73 and operation S75 could be understood more definitely with reference to Fig. 7.

A cooker controlling method according to an embodiment as described above expects itself to have the following effects.

First, in the embodiments, steam is furnished into a cooking chamber while food is cooked in the cooking chamber. Thus, a more effective cooking by steam furnished into a cooking chamber could be performed.

Also, in the embodiments, a phenomenon that steam furnished into a cooking chamber leaks through a porous part for transferring the energy of a heater installed outside the cooking chamber to the cooking chamber is reduced. Thus, operation reliability of a product may be more improved.

While it has not been described in detail in the above-mentioned embodiments, in the course of cooking food in the cooking chamber, the operation of the upper heater, the halogen heater, the magnetron, the convection heater, the convection motor, the steam heater and the water supply pump would be ended when the cooking chamber is opened, that is, when a door entering into the cooking chamber is open. Considering it is the fact applying to a general cooker, for example an electronic range, the related detailed description will be omitted.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for controlling a cooker, comprising:
oscillating microwave supplied to a cooking chamber, by a high-frequency heating source (10); and
generating steam supplied to the cooking chamber, by a steam generator (30),
wherein in a case a signal for initiating the operation of the steam generator (30) is input before the operation of the high-frequency heating source is started, the operation of the steam generator (30) is initiated at a preset time separately of a time when the operation of the high-frequency heating source is started, and
in a case a signal for initiating the operation of the steam generator (30) is input after the operation of the high-frequency heating source is started, the operation of the steam generator (30) is initiated at a time when the manipulation signal is input, and
the method further comprises the operation of circulating air inside the cooking chamber by a convection part in a case the steam generating operates,
**characterised in that**
the operation of the convection part ends after the operation of the steam generator (30) is completed.

2. The method according to claim 1, wherein the high-frequency heating source is a magnetron (13) operated during a preset operation time.

3. The method according to claim 1, wherein the operation of the high-frequency heating source ends at the same time as the operation of the steam generator, or ends after the operation of the steam generator (30) is completed.

4. The method according to claim 1, wherein the operation of the steam generator (30) ends in a case a signal for completing the operation of the steam generator (30) is inputted after a preset operation time elapsed, or before the operation time has elapsed.

5. The method according to claim 1, wherein the steam generator, comprising:
a steam heater (31) heating steam water for generating steam furnished into the cooking chamber; and
a water supply pump (33) furnishing steam water which is heated by the steam heater (31).

6. The method according to claim 1, wherein the operation of the steam heater (31) ends in a case a preset time elapses after the operation of the water supply pump (33) is completed.

7. The method according to claim 5,
wherein the steam heater (31) acts continuously in an ON state during the operation time of the steam generator, and
wherein the water supply pump (33) repeats a pumping action at a preset time interval during the operation time of the steam generator.

8. The method according to claim 1, further comprising the operation of furnishing radiating heat into the cooking chamber by a radiating heating source in a case the operation of the steam generator (30) is initiated.

9. The method according to claim 8, wherein the operation of the radiating heating source ends at the same time as the operation of the steam generator (30), or ends after the operation of the steam generator (30) is completed.

10. The method according to claim 8, wherein the radiating heating source repeats an ON/OFF action during the operation time of the steam generator (30).

11. The method according to claim 8, wherein the radiating heating source is a halogen heater (12) installed outside the cooking chamber.

12. The method according to claim 1, wherein the convection part acts continuously in an ON state during the operation time of the steam generator.

13. The method according to claim 1, wherein the convection part, comprising:
a convection fan (16) circulating air in the cooking chamber; and
a convection motor (17) providing a drive force for the operation of the convection fan (16).

## Patentansprüche

1. Verfahren zur Steuerung eines Kochgeräts, das aufweist:
Schwingen von Mikrowellen, die von einer Hochfrequenzheizquelle (10) an eine Garkammer zugeführt werden; und
Erzeugen von Dampf, der an die Garkammer zugeführt wird, durch einen Dampfgenerator (30),
wobei in einem Fall, in dem ein Signal zum Einleiten des Betriebs des Dampfgenerators (30) eingegeben wird, bevor der Betrieb der Hochfrequenzheizquelle gestartet wird, der Betrieb des Dampfgenerators (30) zu einer vorgegebenen Zeit getrennt von einer Zeit, wenn der Betrieb der Hochfrequenzheizquelle gestartet wird, eingeleitet wird, und
wobei in einem Fall, in dem ein Signal zum Einleiten des Betriebs des Dampfgenerators (30) eingegeben wird, nachdem der Betrieb der Hochfrequenzheizquelle gestartet wurde, der Betrieb des Dampfgenerators (30) zu einer Zeit eingeleitet wird, wenn das Bediensignal eingegeben wird, und
wobei das Verfahren ferner in einem Fall, in dem die Dampferzeugung betrieben wird, den Arbeitsgang des Zirkulierens von Luft im Inneren der Garkammer durch einen Umluftteil aufweist,
**dadurch gekennzeichnet, dass** der Betrieb des Umluftteils endet, nachdem der Betrieb des Dampfgenerators (30) abgeschlossen ist.

2. Verfahren nach Anspruch 1, wobei die Hochfrequenzheizquelle ein Magnetron (13) ist, das während einer voreingestellten Betriebszeit betrieben wird.

3. Verfahren nach Anspruch 1, wobei der Betrieb der Hochfrequenzheizquelle gleichzeitig wie der Betrieb des Dampfgenerators endet oder endet, nachdem der Betrieb des Dampfgenerators (30) abgeschlossen ist.

4. Verfahren nach Anspruch 1, wobei der Betrieb des Dampfgenerators (30) in einem Fall endet, in dem ein Signal zum Abschließen des Betriebs des Dampfgenerators (30) eingegeben wird, nachdem eine voreingestellte Betriebszeit abgelaufen ist, oder bevor die Betriebszeit abgelaufen ist.

5. Verfahren nach Anspruch 1, wobei der Dampfgenerator aufweist:
eine Dampfheizung (31), die Dampfwasser zum Erzeugen von Dampf heizt, der in die Garkammer geliefert wird; und
eine Wasserversorgungspumpe (33), die Dampfwasser liefert, das von der Dampfheizung (31) geheizt wird.

6. Verfahren nach Anspruch 1, wobei der Betrieb der Dampfheizung (31) in einem Fall endet, in dem eine voreingestellte Zeit, nachdem der Betrieb der Wasserpumpe (33) abgeschlossen ist, abläuft.

7. Verfahren nach Anspruch 5,
wobei die Dampfheizung (31) während der Betriebszeit des Dampfgenerators fortlaufend in einem EIN-Zustand arbeitet, und
wobei die Wasserversorgungspumpe (33) während der Betriebszeit des Dampfgenerators eine Pumptätigkeit in einem voreingestellten Zeitintervall wiederholt.

8. Verfahren nach Anspruch 1, das ferner in einem Fall, in dem der Betrieb des Dampfgenerators (30) eingeleitet wird, den Betrieb der Lieferung von Strahlungswärme in die Garkammer durch eine Strahlungswärmequelle aufweist.

9. Verfahren nach Anspruch 8, wobei der Betrieb der Strahlungswärmequelle zu der gleichen Zeit wie der Betrieb des Dampfgenerators (30) endet oder endet, nachdem der Betrieb des Dampfgenerators (30) abgeschlossen ist.

10. Verfahren nach Anspruch 8, wobei die Strahlungswärmequelle während des Betriebs des Dampfgenerators (30) eine EIN/AUS-Tätigkeit wiederholt.

11. Verfahren nach Anspruch 8, wobei die Strahlungswärmequelle eine Halogenheizung (12) ist, die außerhalb der Garkammer installiert ist.

12. Verfahren nach Anspruch 1, wobei der Umluftteil in einem EIN-Zustand während der Betriebszeit des Dampfgenerators fortlaufend arbeitet.

13. Verfahren nach Anspruch 1, wobei der Umluftteil aufweist:
einen Umluftventilator (16), der Luft in der Garkammer zirkuliert; und
einen Umluftmotor (17), der eine Antriebskraft für den Betrieb des Umluftventilators (16) bereitstellt.

## Revendications

1. Procédé de commande d'un dispositif de cuisson, comprenant :
l'oscillation de micro-onde fournie à une chambre de cuisson, par une source de chauffage haute fréquence (10) ; et
la génération de vapeur fournie à la chambre de cuisson, par un générateur de vapeur (30),
dans lequel dans un cas où un signal de lancement du fonctionnement du générateur de vapeur (30) est entré avant le démarrage du fonctionnement de la source de chauffage haute fréquence, le fonctionnement du générateur de vapeur (30) est lancé à un moment préréglé séparément d'un moment où le fonctionnement de la source de chauffage haute fréquence est démarré, et
dans un cas où un signal de lancement du fonctionnement du générateur de vapeur (30) est entré après le démarrage du fonctionnement de la source de chauffage haute fréquence, le fonctionnement du générateur de vapeur (30) est lancé à un moment où le signal de manipulation est entré, et
le procédé comprend en outre le fonctionnement de circulation d'air à l'intérieur de la chambre de cuisson par une partie de convection dans un cas où la génération de vapeur fonctionne,
**caractérisé en ce que**
le fonctionnement de la partie de convection se termine après que le fonctionnement du générateur de vapeur (30) est achevé.

2. Procédé selon la revendication 1, dans lequel la source de chauffage haute fréquence est un magnétron (13) fonctionnant pendant un temps de fonctionnement préréglé.

3. Procédé selon la revendication 1, dans lequel le fonctionnement de la source de chauffage haute fréquence se termine au même moment que le fonctionnement du générateur de vapeur, ou se termine après que le fonctionnement du générateur de vapeur (30) est achevé.

4. Procédé selon la revendication 1, dans lequel le fonctionnement du générateur de vapeur (30) se termine dans un cas où un signal d'achèvement du fonctionnement du générateur de vapeur (30) est entré après qu'un temps de fonctionnement préréglé est écoulé, ou avant que le temps de fonctionnement soit écoulé.

5. Procédé selon la revendication 1, dans lequel le générateur de vapeur, comprenant :
un dispositif de chauffage de vapeur (31) chauffant la vapeur d'eau pour générer de la vapeur fournie dans la chambre de cuisson ; et
une pompe d'alimentation en eau (33) fournissant la vapeur d'eau qui est chauffée par le dispositif de chauffage de vapeur (31).

6. Procédé selon la revendication 1, dans lequel le fonctionnement du dispositif de chauffage de vapeur (31) se termine dans un cas où un temps préréglé s'écoule après que le fonctionnement de la pompe d'alimentation en eau (33) est achevé.

7. Procédé selon la revendication 5,
dans lequel le dispositif de chauffage de vapeur (31) agit en continu dans un état MARCHE pendant le temps de fonctionnement du générateur de vapeur, et
dans lequel la pompe d'alimentation en eau (33) répète une action de pompage à un intervalle de temps préréglé pendant le temps de fonctionnement du générateur de vapeur.

8. Procédé selon la revendication 1, comprenant en outre le fonctionnement de fourniture de chaleur rayonnante dans la chambre de cuisson par une source de chauffage rayonnant dans un cas où le fonctionnement du générateur de vapeur (30) est lancé.

9. Procédé selon la revendication 8, dans lequel le fonctionnement de la source de chauffage rayonnant se termine en même temps que le fonctionnement du générateur de vapeur (30), ou se termine après que le fonctionnement du générateur de vapeur (30) est achevé.

10. Procédé selon la revendication 8, dans lequel la source de chauffage rayonnant répète une action MARCHE/ARRÊT pendant le temps de fonctionnement du générateur de vapeur (30).

11. Procédé selon la revendication 8, dans lequel la source de chauffage rayonnant est un dispositif de chauffage halogène (12) installé à l'extérieur de la chambre de cuisson.

12. Procédé selon la revendication 1, dans lequel la partie de convection agit en continu dans un état MARCHE pendant le temps de fonctionnement du générateur de vapeur.

13. Procédé selon la revendication 1, dans lequel la partie de convection, comprenant :
un ventilateur de convection (16) faisant circuler l'air dans la chambre de cuisson ; et
un moteur de convection (17) fournissant une force d'entraînement pour le fonctionnement du ventilateur de convection (16).
